# EUROPÄISCHE PATENTSCHRIFT

(11) **EP 3 208 320 B1**
(45) Veröffentlichungstag und Bekanntmachung des Hinweises auf die Patenterteilung: **28.03.2018**
(21) Anmeldenummer: 16156487.7
(22) Anmeldetag: 19.02.2016
(51) Int. Cl.: C09D 163/10, C08G 59/17, C08L 63/10

(54) **LACKZUSAMMENSETZUNG UND IHRE VERWENDUNG**
VARNISH COMPOSITION AND ITS USE
COMPOSITION DE LAQUE ET SON UTILISATION

(43) Veröffentlichungstag der Anmeldung: 23.08.2017
(73) Patentinhaber: Karl Wörwag Lack- Und Farbenfabrik GmbH & Co. KG, 70435 Stuttgart (DE)
(72) Erfinder: Hiller, Siegfried, 74199 Unterheinriet (DE)
(74) Vertreter: Patentanwaltskanzlei Cartagena

(56) Entgegenhaltungen:
- EP-A1- 2 097 369
- EP-A1- 2 168 994
- WO-A1-2005/090031
- WO-A1-2009/100899
- JP-A- 2010 013 507

## Beschreibung

Die Erfindung betrifft eine durch UV-Strahlung härtbare Lackzusammensetzung, die insbesondere zur Lackierung von Fahrwerkskomponenten von Schienenfahrzeugen vorgesehen ist. Entsprechend betrifft die Erfindung auch die Verwendung der Lackzusammensetzung zur Lackierung von Fahrwerkskomponenten, ein Verfahren zur Lackierung einer Fahrwerkskomponente sowie lackierte Fahrwerkskomponenten.

Teile von Eisenbahnfahrzeugen wie z.B. Drehgestelle und Achsen sind im Betrieb häufig sehr stark durch Steinschlag und Korrosion belastet. Die Bahn fährt teilweise mit so hohen Geschwindigkeiten, dass Steine und andere Gegenstände vom Boden angesaugt werden und gegen das Fahrwerk prallen. Durch geeignete Lackierung des Fahrwerks, insbesondere der Drehgestelle und Achsen, versucht man, einen einfachen und effizienten Schutz gegen chemische und mechanische Belastungen bereitzustellen.

Eine Lackzusammensetzung zur Lackierung von Nutzfahrzeugachsen ist aus der WO 2009/100899 A1 bekannt. Diese Zusammensetzung erwies sich jedoch als allenfalls bedingt geeignet zur Beschichtung der genannten hochbelasteten Teile. Zum einen erwies sie sich als zu spröde um einen dauerhaften Schutz gegen die genannten mechanischen Belastungen bieten zu können. Gefordert war eine Beschichtung, die auch bei tiefen Temperaturen eine vergleichsweise hohe Elastizität bieten kann. Zum anderen erwies sich die die Zusammensetzung als ungeeignet zur Lackierung von sehr rauhen Metalloberflächen, wie sie sehr häufig bei Fahrwerkteilen von Eisenbahnen anzutreffen sind.

Fahrwerkteilen von Eisenbahnen bestehen häufig aus Metallguss und weisen bereits deshalb eine hohe Rautiefe auf. Weiterhin entstehen Oberflächen mit hohen Rautiefen auch bei Oberflächenvorbehandlungen wie dem Druckluftstrahlen mit einem festen Strahlmittel. Diese Rauheit muss der Lack ausgleichen. Dabei ist über die Gussspitzen eine Lackschicht aufzubringen, die in der Regel mindestens 60 bis 80 µm über den Spitzen liegt, um einen ausreichenden Korrosionsschutz zu gewährleisten. Dies bedeutet, dass in der Praxis Schichtstärken im Bereich von 120 bis 150 µm erreichen werden müssen.

Der aus der WO 2009/100899 A1 bekannte Lack erwies sich unter diesen Voraussetzungen als sehr schlecht geeignet, da er sich bei großen Schichtdicken nur noch schwer aushärten ließ. Begegnen konnte man dem zwar, indem man den Lack in mehreren Schichten auftrug. Das ging allerdings mit einem verdoppelten Aufwand einher.

Der vorliegenden Erfindung lag die Aufgabe zugrunde, eine technische Lösung bereitzustellen, welche die Bereitstellung von hochbelasteten Teilen für Fahrwerkskomponenten von Eisenbahnfahrzeugen ermöglicht, die insbesondere im Hinblick auf den Schutz vor Korrosion, Umwelteinflüssen und Steinschlag den höchsten Anforderungen genügen. Besonderes Augenmerk war dabei auf die Bereitstellung einer Lackzusammensetzung gerichtet, die sich zur Lackierung von Drehgestell- und Achsbauteilen eignet. Die Zusammensetzung sollte beim Lackieren eine gute Deckkraft bei gleichzeitig guten Härtungs- und Hafteigenschaften aufweisen, insbesondere auf Untergründen aus Stahl, Stahlguss und Sphäroguss. Des Weiteren sollte sich die Zusammensetzung mittels einfacher, herkömmlicher Applikationsverfahren auftragen lassen.

Diese Aufgabe wird gelöst durch die Lackzusammensetzung mit den Merkmalen des 1 sowie die Verwendung und das Verfahren mit den Merkmalen der Ansprüche 10 und 11. Bevorzugte Ausführungsformen sind in den abhängigen Ansprüchen 2 bis 9 angegeben. Bevorzugte Ausführungsformen der erfindungsgemäßen Verwendung und des erfindungsgemäßen Verfahrens finden sich in den abhängigen Ansprüchen 12 bis 14. Weiterhin ist auch die Fahrwerkskomponente mit den Merkmalen des Anspruchs 15 Gegenstand der vorliegenden Erfindung.

Eine erfindungsgemäße Lackzusammensetzung ist durch UV-Strahlung härtbar und enthält
- ein aromatisches Epoxyacrylat-Prepolymer,
- ein polyestermodifiziertes Epoxyacrylat-Prepolymer, sowie
- Talkum.

Die Lackzusammensetzung zeichnet sich dadurch aus, dasssie
- das Talkum, bezogen auf das Gesamtgewicht der Lackzusammensetzung abzüglich ggf. enthaltenen Lösungsmittels, in der Lackzusammensetzung in einem Anteil von 15 Gew.-% bis 35 Gew.-% enthält, und
- das aromatische Epoxyacrylat-Prepolymer und das polyestermodifizierte Epoxyacrylat-Prepolymer in der Lackzusammensetzung in Mengen enthalten sind, so dass in der Lackzusammensetzung das Verhältnis der Gesamtanzahl der Doppelbindungen in dem aromatischen Epoxyacrylat-Prepolymer zur Gesamtanzahl der Doppelbindungen in dem polyestermodifizierten Epoxyacrylat-Prepolymer im Bereich von 1:2 bis 2:1, bevorzugt im Bereich von 1:1,5 bis 1,5:1, besonders bevorzugt im Bereich von 1:1,2 bis 1,2:1, liegt.

A priori wäre zu erwarten gewesen, dass die Einstellung der Mengenverhältnisse von polyestermodifiziertem Epoxyacrylat-Prepolymer zu aromatischem Epoxyacrylat-Prepolymer in dem genannten Bereich zwar zu einem relativ flexiblen und elastischen Lack, allerdings auch zu einer sehr schlechten Aushärtung führt. Überraschenderweise konnte dem aber durch den Zusatz des Talkums in den genannten Anteilen begegnet werden. Aus der erfindungsgemäßen Lackzusammensetzung hergestellte Lacke zeichnen sich durch hohe Elastizität aus während die Lackzusammensetzung selbst ausgesprochen gute Härtungseigenschaften aufweist.

Bei Talkum handelt es sich bekanntlich um ein verbreitetes hydratisiertes Magnesiumsilicat der Zusammensetzung Mg₃[(OH)₂/Si₄O₁₀] od. 3 Mg · 4 SiO₂ · H₂O (ein sogenanntes Dreischicht-(2:1-)-Phyllosilicat), dessen dichtere Aggregate Speckstein heißen. Das in der Lackzusammensetzung enthaltene Talkum weist bevorzugt eine mittlere Teilchengröße von ≤ 30 µm, bevorzugt von ≤ 20 µm, insbesondere von ≤ 10 µm, auf.

In einer bevorzugten Weiterbildung enthält die Lackzusammensetzung das Talkum in einem Anteil von 20 Gew.-% bis 30 Gew.-%.

In einer weiteren bevorzugten Weiterbildung sind das aromatische Epoxyacrylat-Prepolymer und das polyestermodifizierte Epoxyacrylat-Prepolymer in der Lackzusammensetzung in Mengen enthalten, so dass in der Lackzusammensetzung das Verhältnis der Gesamtanzahl der Doppelbindungen in dem aromatischen Epoxyacrylat-Prepolymer zur Gesamtanzahl der Doppelbindungen in dem polyester-modifizierten Epoxyacrylat-Prepolymer im Bereich von 1:1 bis 1,2:1, insbesondere im Bereich von 1,05:1 bis 1,15 : 1 liegt.

In bevorzugten Ausführungsformen weist das aromatische Epoxyacrylat-Prepolymer im Mittel 2,75 bis 3,25 ethylenisch ungesättigte Doppelbindungen, insbesondere im Mittel 2,75 bis 3,25 Acrylgruppen, je Molekül Prepolymer auf.

Das polyestermodifizierte Epoxyacrylat-Prepolymer weist vorzugsweise im Mittel 1,75 bis 2,25 ethytenisch ungesättigte Doppelbindungen, insbesondere im Mittel 1,75 bis 2,25 Acrylgruppen, je Molekül Prepolymer auf.

Unter einem Prepolymer ist vorliegend ein oligomeres Harz zu verstehen, das sich durch UV-Strahlung mit sich selbst und/oder mit einem oder mehreren anderen Prepolymeren zu einem Polymer vernetzen lässt, im Vergleich zu dem entstehenden Polymer aber ein sehr niedriges Molekulargewichte aufweist.

Es ist bevorzugt, dass das aromatische Epoxyacrylat-Prepolymer ein mittleres Molekulargewicht Mw (Mw = Weight Average Molecular Weight, ermittelbar mittels Gel-Permeations-Chromatographie) im Bereich von 500 g/mol bis 2000 g/mol, besonders bevorzugt im Bereich von 1000 g/mol bis 1500 g/mol, aufweist.

Das polyestermodifizierte Epoxyacrylat-Prepolymer weist bevorzugt ein mittleres Molekulargewicht Mw (Mw = Weight Average Molecular Weight, ermittelbar mittels Gel-Permeations-Chromatographie) im Bereich von 5500 g/mol bis 7500 g/mol, besonders bevorzugt im Bereich von 6000 g/mol bis 7000 g/mol, auf.

Unter einem polyestermodifizierten Epoxyacrylat-Prepolymer ist ein Epoxyacrylatharz zu verstehen, das sich aus Molekülen zusammensetzt, die eine aus Bisphenol-A-Diglycidylether gebildete Hauptkette (Backbone) aufweist sowie mehrere Seitenketten, die eine Estergruppe aufweisen, insbesondere über eine Estergruppe funktionalisiert sind.

Aus Bisphenol-A-Diglycidylether gebildete Hauptketten weisen Hydroxygruppen auf, an die Carboxylgruppen unter Wasserabspaltung und unter Bildung einer Estergruppe koppeln können. Bevorzugt sind auf diese Weise an die aus Bisphenol-A-Diglycidylether gebildete Hauptkette ungesättigte Carbonsäuren, insbesondere endständig ungesättigte Carbonsäuren, angekoppelt.

Die angekoppelten Carbonsäuren weisen bevorzugt von drei bis 20 C-Atome, insbesondere von drei bis zehn C-Atome, auf. Besonders bevorzugt ist Acrylsäure oder Methacrylsäure über die Hydroxygruppen angekoppelt. Die Seitenketten weisen somit in besonders bevorzugten Ausführungsformen nicht nur eine Ester- sondern auch eine Acrylgruppe auf.

Zusätzlich oder alternativ kann die aus Bisphenol-A-Diglycidylether gebildete Hauptkette auch endständig Acrylgruppen aufweisen, die klassisch durch Umsetzung endständiger Epoxid-Gruppen gebildet sind.

Unter einem aromatischen Epoxyacrylat-Prepolymer ist ein Epoxyacrylatharz zu verstehen, das eine Hauptkette mit aromatischen Resten aufweist. Bevorzugt weist das aromatische Epoxyacrylat-Prepolymer eine aus einem Phenol oder einem Phenolderivat wie Kresol und Formaldehyd gebildete Novolak-Hauptkette auf.

Novolake lassen sich durch Umsetzung mit Epichlorhydrin leicht zu Novolaken mit Glycidyl-Resten wie Epoxyphenol-Novolak oder Epoxykresol-Novolak umsetzen. Hieran lassen sich unter Bildung von Epoxynovolakacrylaten wiederum ungesättigte Carbonsäuren wie Acryl- oder Methacrylsäure ankoppeln. Bevorzugt handelt es sich bei dem aromatischen Epoxyacrylat-Prepolymer um ein solches Epoxynovolakacrylat.

Besonders bevorzugt handelt es sich bei dem aromatischen Epoxyacrylat-Prepolymer um ein Epoxynovolak-tri-Acrylat.

In bevorzugten Ausführungsformen enthält die Lackzusammensetzung das Epoxynovolakacrylat-Prepolymer in einem Anteil von 5 Gew.-% bis 25 Gew.-%, bevorzugt in einem Anteil von 5 Gew.-% bis 15 Gew.-%.

Das polyestermodifizierte Epoxyacrylat-Prepolymer ist in der Lackzusammensetzung bevorzugt in einem Anteil von 10 bis 35 Gew.-%, bevorzugt in einem Anteil von 10 bis 20 Gew.-%, enthalten.

Die angegebenen Prozentangaben beziehen sich jeweils auf das Gesamtgewicht der Lackzusammensetzung abzüglich ggf. enthaltenen Lösungsmittels.

Die erfindungsgemäße Lackzusammensetzung kann natürlich einen Anteil an Lösungsmittel enthalten, wobei unter dem Begriff Lösungsmittel an dieser Stelle flüchtiges Lösungsmittel gemeint ist, also Lösungsmittel, dass sich nach Trocknung und Aushärtung der Lackzusammensetzung weitestgehend verflüchtigt hat. Bevorzugt ist die Lackzusammensetzung allerdings frei von solchen Lösungsmitteln formuliert.

Im Gegensatz dazu enthält die Lackzusammensetzung in einigen besonders bevorzugten Ausführungsformen allerdings mindestens einen Reaktivverdünner, worunter Lösungsmittel zu verstehen sind, die an einer Vernetzungsreaktion in der Zusammensetzung teilnehmen können und sich nicht verflüchtigen. Stattdessen werden Reaktivverdünner in die Matrix eines aus der Lackzusammensetzung gebildeten Lacks eingebaut.

Besonders bevorzugt enthält die Lackzusammensetzung als Reaktivverdünner mindestens eine Vinylgruppen enthaltende Verbindung, insbesondere mindestens einen Reaktivverdünner aus der Gruppe mit Tetrahydrofurfurylacrylat und 2-Phenoxyethylacrylat.

In einer bevorzugten Weiterbildung obiger Ausführungsformen enthält die Lackzusammensetzung die folgenden Komponenten in den folgenden Anteilen:
- das Epoxynovolakacrylat-Prepolymer in einem Anteil von 5 Gew.-% bis 25 Gew.-%, bevorzugt in einem Anteil von 5 Gew.-% bis 15 Gew.-%,
- das polyestermodifizierte Epoxyacrylat-Prepolymer in einem Anteil von 10 Gew.-% bis 35 Gew.-%, bevorzugt in einem Anteil von 10 Gew.-% bis 20 Gew.-%,
- den mindestens einen Reaktivverdünner in einem Anteil von 10 Gew.-% bis 50 Gew.-%, bevorzugt in einem Anteil von 25 Gew.-% bis 45 Gew.-%, insbesondere in einem Anteil von 30 Gew.-% bis 40 Gew.-%.

Die Prozentangaben beziehen sich auch hier auf das Gesamtgewicht der Lackzusammensetzung abzüglich gegebenenfalls enthaltenen Lösungsmittels.

Es ist besonders bevorzugt, dass der mindestens eine Reaktivverdünner das Tetrahydrofurfurylacrylat und das 2-Phenoxyethylacrylat in einem Mengenverhältnis im Bereich von 1:1 bis 1:2, insbesondere in einem Verhältnis von 1:1,5, umfasst.

In bevorzugten Ausführungsformen werden das Epoxynovolakacrylat-Prepolymer und das polyestermodifizierte Epoxyacrylat-Prepolymer bei der Herstellung der erfindungsgemäßen Lackzusammensetzung jeweils gelöst in einem Reaktivverdünner eingesetzt. Das Epoxynovolakacrylat-Prepolymer und das polyestermodifizierte Epoxyacrylat-Prepolymer werden beide bevorzugt gelöst in 2-Phenoxyethylacrylat verwendet. An Stelle des 2-Phenoxyethylacrylats kann in einigen Ausführungsformen auch Tetrahydrofurfurylacrylat eingesetzt werden.

Bevorzugt liegt die Viskosität der eingesetzten Acrylate bei > 5 Pas (bestimmt mittels eines Rotationsviskosimeters nach DIN EN ISO 3219 bei 20 °C). Die Viskosität der Lackzusammensetzung liegt vorzugsweise im Bereich von 500 mPas bis 5000 mPas, insbesondere von 800 mPas bis 2500 mPas (ebenfalls bestimmt mittels eines Rotationsviskosimeters nach DIN EN ISO 3219 bei 20 °C).

Erfindungsgemäß kann die Lackzusammensetzung zusätzlich zu den bereits genannten Komponenten mindestens eine der folgenden Komponenten enthalten:
- Mindestens einen Photoinitiator, insbesondere in einem Anteil im Bereich von 1 bis 10 Gew.-%: Als geeignete Photoinitiatoren sind beispielsweise α-Hydroxyketon, insbesondere 2-Hydroxy-2-methyl-1-phenyl-propan-1-on, oder Bis-Acyl-Phosphin, insbesondere Bis(2,4,6-tri-methyl-benzoyl)phenylphosphinoxid, zu nennen.
- Mindestens einen Füllstoff (neben dem Talkum), insbesondere in einem Anteil im Bereich von 1 bis 25 Gew.-%: Als geeignete Füllstoffe sind beispielsweise Kieselgele, Kalksteinmehl, Dolomit, Bariumsulfat, Quarzmehl und Aluminiumoxid zu nennen.
- Mindestens ein Pigment, insbesondere in einem Anteil im Bereich von 0,01 bis 10 Gew.-%: Geeignet sind als Pigmente anorganische und organische Pigmente, z.B. Ruß und Anilinschwarz.
- Mindestens ein Hilfsadditiv, insbesondere in einem Anteil im Bereich von 0,5 bis 10 Gew.-%: Möglicherweise eingesetzte Hilfsadditive sind beispielsweise Haftvermittler auf Basis von (Meth)acrylat, insbesondere Phosphorsäuremethylacrylat, Entschäumer, insbesondere auf Siloxanbasis, rheologische Additive, insbesondere auf Silikatbasis, Verdicker, insbesondere Kieselsäure, Verlaufsmittel sowie Netz- und Dispergiermittel.

Sofern die Lackzusammensetzung Pigmente und/oder Füllstoffe enthält, so weisen diese wie das in der Lackzusammensetzung enthaltene Talkum bevorzugt eine mittlere Teilchengröße von ≤ 30 µm, bevorzugt von ≤ 20 µm, insbesondere von ≤ 10 µm, auf.

Bevorzugt enthält die Lackzusammensetzung gleichzeitig mindestens einen Photoinitiator, mindestens einen Füllstoff, mindestens ein Pigment und mindestens ein Hilfsadditiv, insbesondere in den jeweils spezifizierten bevorzugten Anteilen.

Es ist bevorzugt, dass sich die Gewichtsanteile der Lackzusammensetzung in allen möglichen Ausführungsformen auf jeweils auf 100 Gew.-% aufsummieren.

Die beschriebene Lackzusammensetzung eignet sich hervorragend zur Lackierung von Fahrwerkskomponenten, insbesondere von Schienenfahrzeugen, besonders bevorzugt von Eisenbahnfahrzeugen. Auch eine solche Verwendung sowie ein Verfahren zur Lackierung einer Fahrwerkskomponente sind Gegenstand der vorliegenden Erfindung.

Gemäß dem erfindungsgemäßen Verfahren wird die Lackzusammensetzung auf eine Fahrwerkskomponente aufgebracht und mit UV-Strahlung bestrahlt. Besonders bevorzugt erfolgt der Vorgang des Aufbringens der Lackzusammensetzung und/oder des Bestrahlens mit UV-Strahlung unter Inertgasatmosphäre.

Die zu lackierenden Fahrwerkskomponenten bestehen bevorzugt aus Stahl, Stahlguss oder Sphäroguss.

Sphäroguss (engl. ductile cast iron) besitzt als Werkstoff für Gussteile stahlähnliche mechanische Eigenschaften. Aus chemischer Sicht handelt es sich bei Sphäroguss um Gusseisen mit Kugelgraphit.

Bei den Fahrwerkskomponenten handelt es sich bevorzugt um Drehgestelle, Achsen, Bestandteile von Drehgestellen und Achsen, Motorgehäuse, Getriebegehäuse oder Fahrgestellteile.

In bevorzugten Ausführungsformen werden die Fahrwerkskomponenten einer Vorbehandlung unterzogen, bevor die Lackzusammensetzung aufgebracht wird. Bei der Vorbehandlung kann es sich beispielsweise um eine Grundierung, besonders bevorzugt eine Kunstharzgrundierung, eine Beschichtung mit Zink, eine Zinkphosphatierung oder eine Eisenphosphatierung, handeln.

In bevorzugten Fällen umfasst die Vorbehandlung an Stelle der Grundierung lediglich eine Oberflächenvorbehandlung wie das eingangs angesprochene Druckluftstrahlen mit einem festen Strahlmittel. Dies gilt insbesondere dann, wenn die zu lackierenden Fahrwerkskomponenten aus Stahl, Stahlguss oder Sphäroguss bestehen. Besonders bevorzugt sind die lackierten Fahrwerkskomponenten gestrahlt nach DIN EN ISO 12944 Teil 4 SA 2,5.Jeder aus der erfindungsgemäßen Lackzusammensetzung hergestellte Lack sowie jede Fahrwerkskomponente, die mit einer erfindungsgemäßen Lackzusammensetzung oder einem daraus hergestellten Lack beschichtet ist, ist Gegenstand der vorliegenden Erfindung.

Ein erfindungsgemäßer Lack bietet hervorragenden Schutz vor Flächen- und Kantenkorrosion sowie vor Steinschlag. Darüber hinaus weist er eine Dauerhitzebeständigkeit von bis zu 140 °C auf. Er haftet sehr gut auf Metallen wie Stahl, Grauguss und Sphäroguss sowie auf vorbeschichteten Anbauteilen. In lösungsmittelfreier Form kann eine Aushärtung der erfindungsgemäßen Lackzusammensetzung binnen weniger Sekunden erfolgen. Mit konventionellen Lacken kann ein erfindungsgemäßer Lack problemlos überlackiert werden (Reparaturlackierung).

Ein weiterer Vorteil ist, dass sich mit einer erfindungsgemäßen Lackzusammensetzung Lackschichten mit einer Dicke von bis zu 150 µm problemlos in einem Schritt auftragen lassen.

Weitere Merkmale der Erfindung ergeben sich aus dem folgenden Ausführungsbeispiel in Verbindung mit den Unteransprüchen. Hierbei können einzelne Merkmale jeweils für sich oder zu mehreren in Kombination miteinander bei einer Ausführungsform der Erfindung verwirklicht sein. Die beschriebenen bevorzugten Ausführungsformen dienen lediglich zur Erläuterung und zum besseren Verständnis der Erfindung und sind in keiner Weise einschränkend zu verstehen.

### Beispiel

Eine bevorzugte Ausführungsform einer erfindungsgemäßen Zusammensetzung weist die folgenden 13 Bestandteile auf:

| **Nr** | **Name (Hersteller)** | **Chemische Bezeichnung** | **Funktion** | **Gehalt in %** |
|---|---|---|---|---|
| 1 | Photocryl E203 (PC-Resin) | Epoxynovolac-tri-Acrylat 70%ig in 2-Phenoxyethyl-Acrylat (PEA-Monomer) | Bindemittel | 16,50 |
| 2 | Photocryl E207 (PC-Resin) | Polyestermodifiziertes Epoxyacrylat 70%ig in 2-Phenoxyethyl-Acrylat (PEA-Monomer) | Bindemittel | 22,00 |
| 3 | Sartomer 285 (Cray Valley) | Tetrahydrofurfuryl-Acrylat (THFA; Monomer) | Reaktivverdünner | 15,00 |
| 4 | Sartomer 399C (Cray Valley) | 2-Phenoxyethyl-Acrylat (PEA; Monomer) | Reaktivverdünner | 8,34 |
| 5 | Ebecryl 171 (Cytec) | Phosphorsäureester- Methacrylat | Hilfsadditiv (Haftvermittler) | 6,00 |
| 6 | Irgacure 1173 (Ciba) | 2-Hydroxy-2-methyl-1-phenyl-propan-1-on | Hilfsadditiv (Flüssiger Photoinitiator mit hoher Reaktivität) | 3,04 |
| 7 | Irgacure 819 (Ciba) | Bis(2,4,6-trimethylbenzoly)-phenylphosphineoxid | Hilfsadditiv (Photoinitiator für die Absorption im langweiligen UV-Bereich) | 0,96 |
| 8 | Garamite 1958 (Rockwood Clay Additives) | Mineralsilikatbasis | Hilfsadditiv (Thixotropiermittel) | 1,00 |
| 9 | Luzenac 10MOOS (Luzenac) | Reines Talkum , fast weiß mit 10 µm Korngröße mit wenig Carbonatanteil | | 25,00 |
| 10 | HDKH18 (Wacker) | Hydrophobe, amorphe Kieselsäure | Hilfsadditiv (Antiablaufmittel) | 0,50 |
| 11 | Spezialschwarz 250 (Evonik Degussa) | Feiner Ruß mit mittlerer Korngröße von 56 nm | Pigment (Schwarzpigment) | 0,132 |
| 12 | Aniline Black BS 890 (Evonik Degussa) | Organisches Schwarzpigment basierend auf der Oxidation von Anilin mit 3 µm Korngröße | Pigment (Schwarzpigment) | 0,528 |
| 13 | Tego Twin 4000 | Polysiloxanderivat | Hilfsadditiv (Benetzung und Entschäumung) | 1,00 |
| | (Tego) | | | |

Zur Erfüllung der VOC-Verordnung wurde die Zusammensetzung absolut lösemittelfrei rezeptiert. Zur Einstellung der Viskosität wurden ausgewählte Reaktivverdünner verwendet. Die gewählten Reaktivverdünner haben den Vorteil, dass sie in die Lackmatrix eingebaut werden und somit nicht flüchtig sind. Die Zusammensetzung gemäß Beispiel hat eine Viskosität im Bereich von 800 mPas bis 2000 mPas.

Die Zusammensetzung lässt sich hervorragend applizieren und durch UV-Strahlung sehr schnell aushärten. Die Kombination aus zwei Photoinitiatoren sorgt dafür, dass der aufgetragene Lack an jeder beliebigen Stelle problemlos aushärtet.

In ausgehärteter Form weist die Zusammensetzung hervorragende Eigenschaften im Hinblick auf Steinschlag- und Korrosionsschutzeigenschaften auf.

## Patentansprüche

1. Durch UV-Strahlung härtbare Lackzusammensetzung, enthaltend
- ein aromatisches Epoxyacrylat-Prepolymer mit im Mittel 2,75 bis 3,25 ethylenisch ungesättigten Doppelbindungen je Molekül Prepolymer,
- ein polyestermodifiziertes Epoxyacrylat-Prepolymer mit im Mittel 1,75 bis 2,25 ethylenisch ungesättigten Doppelbindungen je Molekül Prepolymer, sowie
- Talkum,
**dadurch gekennzeichnet, dass**
- die Lackzusammensetzung das Talkum, bezogen auf das Gesamtgewicht der Lackzusammensetzung abzüglich ggf. enthaltenen Lösungsmittels, in der Lackzusammensetzung in einem Anteil von 15 Gew.-% bis 35 Gew.-% enthält, und
- das aromatische Epoxyacrylat-Prepolymer und das polyestermodifizierte Epoxyacrylat-Prepolymer in der Lackzusammensetzung in Mengen enthalten sind, so dass in der Lackzusammensetzung das Verhältnis der Gesamtanzahl der Doppelbindungen in dem aromatischen Epoxyacrylat-Prepolymer zur Gesamtanzahl der Doppelbindungen in dem Polyester-modifizierten Epoxyacrylat-Prepolymer im Bereich von 1:1,2 bis 1,2:1 liegt.

2. Lackzusammensetzung nach Anspruch 1, **dadurch gekennzeichnet, dass**
- das Talkum in der Lackzusammensetzung in einem Anteil von 20 Gew.-% bis 30 Gew.-% enthalten ist
und/oder
- das aromatische Epoxyacrylat-Prepolymer und das polyestermodifizierte Epoxyacrylat-Prepolymer in der Lackzusammensetzung in Mengen enthalten sind, so dass in der Lackzusammensetzung das Verhältnis der Gesamtanzahl der Doppelbindungen in dem aromatischen Epoxyacrylat-Prepolymer zur Gesamtanzahl der Doppelbindungen in dem polyestermodifizierten Epoxyacrylat-Prepolymer im Bereich von 1:1 bis 1,2 : 1, bevorzugt im Bereich von 1,05:1 bis 1,15:1, liegt.

3. Lackzusammensetzung nach einem der Ansprüche 1 oder 2, **dadurch gekennzeichnet, dass**
- das aromatische Epoxyacrylat-Prepolymer im Mittel 2,75 bis 3,25 ethylenisch ungesättigte Doppelbindungen, insbesondere im Mittel 2,75 bis 3,25 Acrylgruppen, je Molekül Prepolymer
und/oder
- das polyestermodifizierte Epoxyacrylat-Prepolymer im Mittel 1,75 bis 2,25 ethylenisch ungesättigte Doppelbindungen, insbesondere im Mittel 1,75 bis 2,25 Acrylgruppen, je Molekül Prepolymer
aufweist.

4. Lackzusammensetzung nach einem derAnsprüche 1 bis 3, **dadurch gekennzeichnet, dass**
- das aromatische Epoxyacrylat-Prepolymer ein mittleres Molekulargewicht Mw (Mw = Weight Average Molecular Weight, ermittelbar mittels Gel-Permeations-Chromatographie) im Bereich von 500 g/mol bis 2000 g/mol, bevorzugt im Bereich von 1000 g/mol bis 1500 g/mol,
und/oder
- das polyestermodifizierte Epoxyacrylat-Prepolymer ein mittleres Molekulargewicht Mw (Mw = Weight Average Molecular Weight, ermittelbar mittels Gel-Permeations-Chromatographie) im Bereich von 5500 g/mol bis 7500 g/mol, bevorzugt im Bereich von 6000 g/mol bis 7000 g/mol,
aufweist.

5. Lackzusammensetzung nach einem der vorhergehenden Ansprüche, **dadurch gekennzeichnet, dass**
- sie das Epoxynovolakacrylat-Prepolymer in einem Anteil von 5 Gew.-% bis 25 Gew.-%, bevorzugt in einem Anteil von 5 Gew.-% bis 15 Gew.-%,
und/oder
- das polyestermodifizierte Epoxyacrylat-Prepolymer in einem Anteil von 10 Gew.-% bis 35 Gew.-%, bevorzugt in einem Anteil von 10 Gew.-% bis 20 Gew.-%,
enthält, wobei sich die Prozentangaben auf das Gesamtgewicht der Lackzusammensetzung abzüglich ggf. enthaltenen Lösungsmittels beziehen.

6. Lackzusammensetzung nach einem der vorhergehenden Ansprüche, insbesondere nach Anspruch 5, **dadurch gekennzeichnet, dass** sie mindestens einen Reaktivverdünner enthält, insbesondere mindestens einen Reaktivverdünner aus der Gruppe mit Tetrahydrofurfurylacrylat und 2-Phenoxyethylacrylat.

7. Lackzusammensetzung nach Anspruch 6, **dadurch gekennzeichnet, dass** sie die folgenden Komponenten in den folgenden Anteilen enthält, wobei sich die Prozentangaben auf das Gesamtgewicht der Lackzusammensetzung abzüglich ggf. enthaltenen Lösungsmittels beziehen:
- das Epoxynovolakacrylat-Prepolymer in einem Anteil von 5 Gew.-% bis 25 Gew.-%, bevorzugt in einem Anteil von 5 Gew.-% bis 15 Gew.-%,
- das polyestermodifizierte Epoxyacrylat-Prepolymer in einem Anteil von 10 bis 35 Gew.-%, bevorzugt in einem Anteil von 10 Gew.-% bis 20 Gew.-%,
- der mindestens eine Reaktivverdünner in einem Anteil von 10 Gew.-% bis 50 Gew.-%, bevorzugt in einem Anteil von 25 Gew.-% bis 45 Gew.-%, besonders bevorzugt in einem Anteil von 30 Gew.-% bis 40 Gew.-%.

8. Lackzusammensetzung nach einem der Ansprüche 6 oder 7, **dadurch gekennzeichnet, dass** der mindestens eine Reaktivverdünner das Tetrahydrofurfurylacrylat und das 2-Phenoxyethylacrylat in einem Mengenverhältnis im Bereich von 1:1 bis 1:2, insbesondere in einem Verhältnis von 1:1,5, enthält.

9. Lackzusammensetzung nach einem der vorhergehenden Ansprüche, **dadurch gekennzeichnet, dass** sie zusätzlich mindestens eine der folgenden Komponenten enthält:
- mindestens einen Photoinitiator, insbesondere in einem Anteil im Bereich von 1 Gew.-% bis 10 Gew.-%
- mindestens einen Füllstoff (neben dem Talkum), insbesondere in einem Anteil im Bereich von 1 Gew.-% bis 25 Gew.-%
- mindestens ein Pigment, insbesondere in einem Anteil im Bereich von 0,01 Gew.-% bis 10 Gew.-%
- mindestens ein Hilfsadditiv, insbesondere in einem Anteil im Bereich von 0,5 Gew.-% bis 10 Gew.-%

10. Verwendung einer Lackzusammensetzung gemäß einem der vorhergehenden Ansprüche zur Lackierung von Fahrwerkskomponenten, insbesondere von Schienenfahrzeugen (Eisenbahnfahrzeugen).

11. Verfahren zur Lackierung einer Fahrwerkskomponente, wobei eine Lackzusammensetzung gemäß einem der Ansprüche 1 bis 9 auf eine Fahrwerkskomponente aufgebracht und mit UV-Strahlung bestrahlt wird.

12. Verwendung nach Anspruch 10 oder Verfahren nach Anspruch 11, **dadurch gekennzeichnet, dass** die Fahrwerkskomponenten aus Stahl, Stahlguss oder Sphäroguss bestehen und/oder dass es sich bei den Fahrwerkskomponenten um Drehgestelle, Achsen, Bestandteile von Drehgestellen und Achsen, Motorgehäuse, Getriebegehäuse oder Fahrgestellteile handelt.

13. Verfahren nach Anspruch 11 **dadurch gekennzeichnet, dass** der Vorgang des Aufbringens und/oder Bestrahlens mit UV-Strahlung unter Inertgasatmosphäre erfolgt.

14. Verfahren nach Anspruch 11 oder Anspruch 13, **dadurch gekennzeichnet, dass** die Fahrwerkskomponente einer Vorbehandlung unterzogen wird, bevor die Lackzusammensetzung aufgebracht wird, bevorzugt einem Druckluftstrahlen mit einem festen Strahlmittel, insbesondere einem Strahlen gemäß DIN EN ISO 12944 Teil 4 SA 2,5.

15. Fahrwerkskomponente, **dadurch gekennzeichnet, dass** sie mit einem Lack gemäß einem der Ansprüche 1 bis 9 beschichtet ist.

## Claims

1. Coating composition curable by UV radiation, comprising
- an aromatic epoxy acrylate prepolymer having on average 2.75 to 3.25 ethylenically unsaturated double bonds per molecule of prepolymer,
- a polyester-modified epoxy acrylate prepolymer having on average 1.75 to 2.25 ethylenically unsaturated double bonds per molecule of prepolymer, and
- talc,
**characterized in that**
- the coating composition comprises the talc, based on the total weight of the coating composition minus, if applicable, any solvent included, in the coating composition in a fraction of 15 wt% to 35 wt%, and
- the aromatic epoxy acrylate prepolymer and the polyester-modified epoxy acrylate prepolymer are included in the coating composition in amounts such that in the coating composition the ratio of the total number of double bonds in the aromatic epoxy acrylate prepolymer to the total number of double bonds in the polyester-modified epoxy acrylate prepolymer is in the range from 1:1.2 to 1.2:1.

2. Coating composition according to Claim 1, **characterized in that**
- the talc is included in the coating composition in a fraction of 20 wt% to 30 wt%
and/or
- the aromatic epoxy acrylate prepolymer and the polyester-modified epoxy acrylate prepolymer are included in the coating composition in amounts such that in the coating composition the ratio of the total number of double bonds in the aromatic epoxy acrylate prepolymer to the total number of double bonds in the polyester-modified epoxy acrylate prepolymer is in the range from 1:1 to 1.2:1, preferably in the range from 1.05:1 to 1.15:1.

3. Coating composition according to either of Claims 1 and 2, **characterized in that**
- the aromatic epoxy acrylate prepolymer has on average 2.75 to 3.25 ethylenically unsaturated double bonds, more particularly on average 2.75 to 3.25 acrylic groups, per molecule of prepolymer,
and/or
- the polyester-modified epoxy acrylate prepolymer has on average 1.75 to 2.25 ethylenically unsaturated double bonds, more particularly on average 1.75 to 2.25 acrylic groups, per molecule of prepolymer.

4. Coating composition according to any of Claims 1 to 3, **characterized in that**
- the aromatic epoxy acrylate prepolymer has an average molecular weight Mw (Mw = weight-average molecular weight as determinable by gel permeation chromatography) in the range from 500 g/mol to 2000 g/mol, preferably in the range from 1000 g/mol to 1500 g/mol,
and/or
- the polyester-modified epoxy acrylate prepolymer has an average molecular weight Mw (Mw = weight-average molecular weight as determinable by gel permeation chromatography) in the range from 5500 g/mol to 7500 g/mol, preferably in the range from 6000 g/mol to 7000 g/mol.

5. Coating composition according to any of the preceding claims, **characterized in that**
- it comprises the epoxy novolac acrylate prepolymer in a fraction of 5 wt% to 25 wt%, preferably in a fraction of 5 wt% to 15 wt%,
and/or
- the polyester-modified epoxy acrylate prepolymer in a fraction of 10 wt% to 35 wt%, preferably in a fraction of 10 wt% to 20 wt%,
the percentages being based on the total weight of the coating composition minus any solvent included.

6. Coating composition according to any of the preceding claims, more particularly according to Claim 5, **characterized in that** it comprises at least one reactive diluent, more particularly at least one reactive diluent from the group with tetrahydrofurfuryl acrylate and 2-phenoxyethyl acrylate.

7. Coating composition according to Claim 6, **characterized in that** it comprises the following components in the following fractions, the percentages being based on the total weight of the coating composition minus any solvent included:
- the epoxy novolac acrylate prepolymer in a fraction of 5 wt% to 25 wt%, preferably in a fraction of 5 wt% to 15 wt%,
- the polyester-modified epoxy acrylate prepolymer in a fraction of 10 wt% to 35 wt%, preferably in a fraction of 10 wt% to 20 wt%,
- the at least one reactive diluent in a fraction of 10 wt% to 50 wt%, preferably in a fraction of 25 wt% to 45 wt%, more preferably in a fraction of 30 wt% to 40 wt%.

8. Coating composition according to either of Claims 6 and 7, **characterized in that** the at least one reactive diluent comprises the tetrahydrofurfuryl acrylate and the 2-phenoxyethyl acrylate in a quantitative ratio in the range from 1:1 to 1:2, more particularly in a ratio of 1:1.5.

9. Coating composition according to any of the preceding claims, **characterized in that** it additionally comprises at least one of the following components:
- at least one photoinitiator, more particularly in a fraction in the range from 1 wt% to 10 wt%
- at least one filler (other than the talc), more particularly in a fraction in the range from 1 wt% to 25 wt%
- at least one pigment, more particularly in a fraction in the range from 0.01 wt% to 10 wt%
- at least one auxiliary additive, more particularly in a fraction in the range from 0.5 wt% to 10 wt%.

10. Use of a coating composition according to any of the preceding claims for coating chassis components, more particularly of rail vehicles (railway vehicles).

11. Method for coating a chassis component, wherein a coating composition according to any of Claims 1 to 9 is applied to a chassis component and irradiated with UV radiation.

12. Use according to Claim 10 or method according to Claim 11, **characterized in that** the chassis components consist of steel, cast steel or cast spheroidal graphite iron and/or **in that** the chassis components are bogies, axles, constituents of bogies and axles, engine housings, transmission housings or running-gear components.

13. Method according to Claim 11, **characterized in that** the process of applying and/or of irradiating with UV radiation takes place under an inert gas atmosphere.

14. Method according to Claim 11 or Claim 13, **characterized in that** the chassis component is subjected to a pretreatment before the coating composition is applied, preferably to compressed-air blasting with a solid blasting medium, more particularly to blasting in accordance with DIN EN ISO 12944 Part 4 SA 2,5.

15. Chassis component **characterized in that** it is coated with a coating according to any of Claims 1 to 9.

## Revendications

1. Composition de vernis durcissable par rayonnement UV, contenant :
- un prépolymère d'époxyacrylate aromatique contenant en moyenne 2,75 à 3,25 doubles liaisons éthyléniquement insaturées par molécule de prépolymère,
- un prépolymère d'époxyacrylate modifié par un polyester contenant en moyenne 1,75 à 2,25 doubles liaisons éthyléniquement insaturées par molécule de prépolymère, et
- du talc,
**caractérisée en ce que**
- la composition de vernis contient le talc, par rapport au poids total de la composition de vernis moins le solvant éventuellement contenu, dans la composition de vernis, en une proportion de 15 % en poids à 35 % en poids, et
- le prépolymère d'époxyacrylate aromatique et le prépolymère d'époxyacrylate modifié par un polyester sont contenus dans la composition de vernis en quantités telles que le rapport entre le nombre total de doubles liaisons dans le prépolymère d'époxyacrylate aromatique et le nombre total de doubles liaisons dans le prépolymère d'époxyacrylate modifié par un polyester dans la composition de vernis se situe dans la plage allant de 1:1,2 à 1,2:1.

2. Composition de vernis selon la revendication 1, **caractérisée en ce que**
- le talc est contenu dans la composition de vernis en une proportion de 20 % en poids à 30 % en poids et/ou
- le prépolymère d'époxyacrylate aromatique et le prépolymère d'époxyacrylate modifié par un polyester sont contenus dans la composition de vernis en quantités telles que le rapport entre le nombre total de doubles liaisons dans le prépolymère d'époxyacrylate aromatique et le nombre total de doubles liaisons dans le prépolymère d'époxyacrylate modifié par un polyester dans la composition de vernis se situe dans la plage allant de 1:1 à 1,2:1, de préférence dans la plage allant de 1,05:1 à 1,15:1.

3. Composition de vernis selon l'une quelconque des revendications 1 ou 2, **caractérisée en ce que**
- le prépolymère d'époxyacrylate aromatique comprend en moyenne 2,75 à 3,25 doubles liaisons éthyléniquement insaturées, notamment en moyenne 2,75 à 3,25 groupes acryle, par molécule de prépolymère
et/ou
- le prépolymère d'époxyacrylate modifié par un polyester comprend en moyenne 1,75 à 2,25 doubles liaisons éthyléniquement insaturées, notamment en moyenne 1,75 à 2,25 groupes acryle, par molécule de prépolymère.

4. Composition de vernis selon l'une quelconque des revendications 1 à 3, **caractérisée en ce que**
- le prépolymère d'époxyacrylate aromatique présente un poids moléculaire moyen Mw (Mw = Weight Average Molecular Weight, pouvant être déterminé par chromatographie par perméation de gel) dans la plage allant de 500 g/mol à 2 000 g/mol, de préférence dans la plage allant de 1 000 g/mol à 1 500 g/mol,
et/ou
- le prépolymère d'époxyacrylate modifié par un polyester présente un poids moléculaire moyen Mw (Mw = Weight Average Molecular Weight, pouvant être déterminé par chromatographie par perméation de gel) dans la plage allant de 5 500 g/mol à 7 500 g/mol, de préférence dans la plage allant de 6 000 g/mol à 7 000 g/mol.

5. Composition de vernis selon l'une quelconque des revendications précédentes, **caractérisée en ce que**
- elle contient le prépolymère d'époxy-novolaque-acrylate en une proportion de 5 % en poids à 25 % en poids, de préférence en une proportion de 5 % en poids à 15 % en poids,
et/ou
- le prépolymère d'époxyacrylate modifié par un polyester en une proportion de 10 % en poids à 35 % en poids, de préférence en une proportion de 10 % en poids à 20 % en poids,
les données de pourcentage se rapportant au poids total de la composition de vernis moins le solvant éventuellement contenu.

6. Composition de vernis selon l'une quelconque des revendications précédentes, notamment selon la revendication 5, **caractérisée en ce qu'**elle contient au moins un diluant réactif, notamment au moins un diluant réactif du groupe comprenant l'acrylate de tétrahydrofurfuryle et l'acrylate de 2-phénoxyéthyle.

7. Composition de vernis selon la revendication 6, **caractérisée en ce qu'**elle contient les composants suivants en les proportions suivantes, les données de pourcentage se rapportant au poids total de la composition de vernis moins le solvant éventuellement contenu :
- le prépolymère d'époxy-novolaque-acrylate en une proportion de 5 % en poids à 25 % en poids, de préférence en une proportion de 5 % en poids à 15 % en poids,
- le prépolymère d'époxyacrylate modifié par un polyester en une proportion de 10 % en poids à 35 % en poids, de préférence en une proportion de 10 % en poids à 20 % en poids,
- ledit au moins un diluant réactif en une proportion de 10 % en poids à 50 % en poids, de préférence en une proportion de 25 % en poids à 45 % en poids, de manière particulièrement préférée en une proportion de 30 % en poids à 40 % en poids.

8. Composition de vernis selon l'une quelconque des revendications 6 ou 7, **caractérisée en ce que** ledit au moins un diluant réactif contient l'acrylate de tétrahydrofurfuryle et l'acrylate de 2-phénoxyéthyle en un rapport de quantités dans la plage allant de 1:1 à 1:2, notamment en un rapport de 1:1,5.

9. Composition de vernis selon l'une quelconque des revendications précédentes, **caractérisée en ce qu'**elle contient en outre au moins un des composants suivants :
- au moins un photoinitiateur, notamment en une proportion dans la plage allant de 1 % en poids à 10 % en poids,
- au moins une charge (outre le talc), notamment en une proportion dans la plage allant de 1 % en poids à 25 % en poids,
- au moins un pigment, notamment en une proportion dans la plage allant de 0,01 % en poids à 10 % en poids,
- au moins un additif auxiliaire, notamment en une proportion dans la plage allant de 0,5 % en poids à 10 % en poids.

10. Utilisation d'une composition de vernis selon l'une quelconque des revendications précédentes pour le vernissage de composants de châssis, notamment de véhicules ferroviaires (véhicules de chemin de fer).

11. Procédé de vernissage d'un composant de châssis, selon lequel une composition de vernis selon l'une quelconque des revendications 1 à 9 est appliquée sur un composant de châssis et exposée à un rayonnement UV.

12. Utilisation selon la revendication 10 ou procédé selon la revendication 11, **caractérisé en ce que** les composants de châssis sont constitués d'acier, d'acier coulé ou de fonte nodulaire, et/ou **en ce que** les composants de châssis sont des bogies, des axes, des constituants de bogies et d'axes, des carcasses de moteur, des boîtes de transmission ou des parties de suspension.

13. Procédé selon la revendication 11, **caractérisé en ce que** le processus d'application et/ou d'exposition à un rayonnement UV a lieu sous atmosphère de gaz inerte.

14. Procédé selon la revendication 11 ou la revendication 13, **caractérisé en ce que** le composant de châssis est soumis à un prétraitement avant l'application de la composition de vernis, de préférence un décapage à l'air comprimé avec un abrasif solide, notamment un décapage selon DIN EN ISO 12944 partie 4 SA 2,5.

15. Composant de châssis, **caractérisé en ce qu'**il est revêtu avec un vernis selon l'une quelconque des revendications 1 à 9.
